# EUROPÄISCHE PATENTANMELDUNG

(11) **EP 2 181 972 A1**
(43) Veröffentlichungstag der Anmeldung: **05.05.2010**
(21) Anmeldenummer: 09011912.4
(22) Anmeldetag: 18.09.2009
(51) Int. Cl.: C04B 20/10

(54) **Abindeverzögertes eingekapseltes hydraulisches Bindemittel**

(30) Priorität: 31.10.2008 DE 102008054102
(71) Anmelder: Technische Universität Hamburg-Harburg, 21073 Hamburg (DE); TuTech Innovation GmbH, 21079 Hamburg (DE)
(72) Erfinder: Schmidt-Döhl, Frank, Prof. Dr., 38108 Braunschweig (DE)
(74) Vertreter: Niedmers, Ole

(57) **Zusammenfassung**

Es wird ein Bindemittel (11), bestehend aus einer Menge im wesentlichen partikelförmiger Körper (12), die in Kontakt mit einem flüssigen Medium (13) eine Feststoffphase bilden, vorgeschlagen. Dabei ist jeder Körper (12) mit wenigstens einem Mittel eingekapselt und die Ausbildung der Feststoffphase kann erst dann erfolgen, wenn die Menge der eingekapselten Körper (12, 14) derart beaufschlagt wird, daß die Einkapselung (14) zerstört wird.

## Beschreibung

Die Erfindung betrifft ein Bindemittel, bestehend aus einer Menge aus im wesentlichen partikelförmiger Körper, die bei Kontakt mit einem flüssigen Medium eine Feststoffphase bilden.

Ein typisches hydraulisches Bindemittel ist bspw. Zement. Zement besteht aus einzelnen partikelförmigen Körpern, wobei eine Mischung wenigstens aus Zement und Wasser zur Reaktion der partikelförmigen Körper mit dem Wasser in Berührung kommt und dadurch eine neue Feststoffphase gebildet wird. Diese Phasenneubildung führt zur Ausbildung von Bindungskräften zwischen den partikelförmigen Körpern des Bindemittels und zwischen den partikelförmigen Körpern des Bindemittels und ggf. anderen Komponenten, bspw. Sand als typischer Baustoffkomponente. Der Baustoff härtet nachfolgend. Die Festigkeitszunahme vom flüssigen bzw. fließfähigen Baustoff im Verarbeitungszustand zum fertig erhärteten Baustoff folgt einer baustoffspezifischen Zeitfunktion, die da lautet: Festigkeit = f (Zeit). Diese Zeitfunktion läßt sich zwar durch verschiedene Parameter, die den Baustoff beschreiben, bspw. Mahlfeinheit, oder durch die Verwendung von Zusatzmitteln verzögern oder auch beschleunigen oder durch Veränderung der Temperatur des Bindemittels bzw. des Baustoffes schlechthin, und zwar nach der Funktion, daß es zu einer um so schnelleren Erhärtung kommt, je wärmer es wird.

Ist allerdings der Baustoff einmal angemischt, dann folgt seine Erhärtung entsprechend der voraufgeführten Zeitfunktion und kann nicht mehr angehalten werden.

Das ist für viele Anwendungszwecke, insbesondere auch für die Anwendung einer Mischung aus Zement und Betonit oder einer Mischung aus Zement und Sand, insbesondere im Bausektor bei Beton aber auch beim Modellieren von Formen von Bauteilen von außerordentlich großem Nachteil. Nach wie vor ist es ein weitgehend ungelöstes Problem beim Schütten von Beton, bekanntermaßen eine Mischung aus Zement als Bindemittel und Wasser und schließlich Sand, von Konstruktionen aus unterschiedlichen Betontranchen, die im fließfähigen Zustand angeliefert werden, dafür zu sorgen, daß sich dann beide Betontranchen so verbinden, als ob sie eine einzige Betontranche gewesen wären.

Ein weiteres Problem mit den Bindemitteln vorbeschriebener Art, insbesondere aber auch bei den im einzelnen vorbeschriebenen Baustoffen, ist es, daß auch die Aushärtezeit gem. der obigen Zeitfunktion eine wichtige Rolle spielt, denn es ist auch vielfach gefordert, den Aushärteprozeß zeitlich genau in bezug auf die gewollte Länge steuern zu können, wodurch auch auf spezifische Eigenschaften eines Bindemittels abgestellt werden kann.

Es ist somit Aufgabe der vorliegenden Erfindung, ein Bindemittel zu schaffen, das geeignet ist, daß ein Baustoff oder ein Baustoffgemisch so lange in einem flüssigen oder fließfähigen Verarbeitungszustand verbleiben kann, wie es die jeweilige Situation erfordert, und auch nach Einleitung des Erhärtungsprozesses der Erhärtungsprozeß in bezug auf seine zeitliche Länge wunschgemäß eingestellt werden kann.

Gelöst wird die Aufgabe gem. der Erfindung dadurch, daß jeder Körper mit einem Mittel eingekapselt ist und die Ausbildung der Feststoffphase erst dann erfolgen kann, wenn die Menge der gekapselten Körper derart beaufschlagt wird, daß die Einkapselung zerstört wird.

Der Vorteil der erfindungsgemäßen Lösung liegt im wesentlichen darin, daß, wie angestrebt, der Baustoff tatsächlich so lange im flüssigen oder fließfähigen Verarbeitungszustand verbleiben kann, bis der Erhärtungsprozeß durch eine gezielte Beaufschlagung der eingekapselten Körper des Bindemittels ausgelöst wird.

Im weitesten Sinne könnte man für Beaufschlagung auch von einem Auslösungsimpuls sprechen, d.h. Impuls im Sinne eines Anstoßes oder einer Anregung.

Da der Erhärtungsprozeß vorteilhafterweise erst dann eingeleitet wird, nachdem die Beaufschlagung erfolgt ist, kann man nach beliebiger, frei wählbarer Zeit den Erhärtungsprozeß gezielt in Gang setzen, wodurch vorteilhafterweise für solche Bauweisen ausreichend Zeit vorhanden ist, bei denen der Baustoff bis zum Abschluß bestimmter Vorarbeiten gut verarbeitbar bleiben muß, auch unter den Unwägbarkeiten eines Bauablaufs, dann aber nach Abschluß der gezielt gewollten flüssigen bzw. fließfähigen Phase des Bindemittels der Baustoff erhärten soll, bspw. bei Schlitzwänden oder in dicken monolitischen Bauteilen.

Gem. einer vorteilhaften Ausgestaltung der Erfindung erfolgt die Beaufschlagung durch chemische Beeinflussung der Menge der eingekapselten Körper, d.h. durch chemische Mittel wird die Einkapselung zur Auslösung des Erhärtungsprozesses beaufschlagt. Es ist aber vorteilhafterweise gem. einer anderen Ausgestaltung der Erfindung möglich, die Beaufschlagung durch physikalische Mittel erfolgen zu lassen, d.h. die Zerstörung der Einkapselung der Menge der Eingekapselten Körper durch einen physikalischen Prozeß auszulösen, bspw. durch gezielte Wärmezufuhr, wodurch sich dann der Zerstörungsprozeß nach Art einer Kettenreaktion, wenn er in Gang gekommen ist, selbständig erhält und dann sein Ende nach Abschluß des Erhärtungsprozesses selbständig findet. So kann bspw. das Mittel, ggf. zusätzlich zum Bindemittel, exotherme Eigenschaften haben bzw. exotherm sein.

Gem. einer besonders vorteilhaften Ausgestaltung der Erfindung ist das Bindemittel Zement und das flüssige Medium im wesentlichen Wasser, d.h. beide Komponenten sind die wichtigsten Komponenten zur Realisierung von Beton- und auch Mörtelkonstruktionen. Insbesondere im Bereich der Betonbautechnik tritt immer wieder das Problem auf, daß bei großvolumigen Betonschüttvorhaben nur mit sehr großen Schwierigkeiten die verschiedenen angelieferten Betonmengentranchen über die gleiche Zeit verarbeitbar sind, was eine sehr genaue Planung des Bau- bzw. Schüttobjekts voraussetzt und eine präzise geplante und eingehaltene Logistik in bezug auf die Anlieferung des Betons zum gewünschten Einsatzort. Durch die erfindungsgemäß vorgeschlagene Lösung ist das eingangs genannte Problem auch insbesondere für den Betonbau weitgehend gelöst.

Um die Einleitung der Aushärtung des Bindemittels auch ggf. der spezifischen Zusammensetzung des Bindemittels Zement noch gezielter vonstattengehen zu lassen, sind gem. einer noch anderen, sehr vorteilhaften Ausgestaltung des Bindemittels die partikelförmigen, eingekapselten Körper mit einer die erste Kapselung umgebenen zweiten Kapselung eingekapselt, d.h. quasi eine Kapsel in der Kapsel. So kann jede der beiden hier beispielhaft angegebenen Kapseln auf bestimmte Beaufschlagung von außen reagieren, um einen bestimmten chemischen Prozeß einzuleiten, d.h. die Beaufschlagung zunächst der äußeren zweiten Kapselung mit einem geeigneten chemischen und/oder physikalischen Impuls, und nachfolgend die Beaufschlagung der ersten, inneren Kapselung nach der Einleitung der Zerstörung und der darauf nachfolgenden Zerstörung der äußeren zweiten Kapsel.

Im Rahmen der Erfindung liegt es auch, die partikelförmigen Körper, die das eigentliche Bindemittel bilden, mit mehr als zwei Kapselungen aus unterschiedlichen Mitteln zu versehen, um den gewollten, spezifischen Bedingungen in der Aushärtephase des Bindemittels noch besser entsprechen zu können.

Im Rahmen der Auslösung der Erhärtung eines zementgebundenen Bauteils kann es vorteilhaft sein, die zweite äußere Kapselung nicht wasserlöslich auszubilden, aber derart auszubilden, daß sie von Wasser mit hohem pH-Wert zerstört wird und es kann in diesem Zusammenhang auch äußerst vorteilhaft sein, das Bindemittel derart auszubilden, daß die erste, innere Kapselung wasserlöslich ist, aber durch Kontakt mit dem Bindemittel nicht zerstört wird, d.h. von Wasser mit hohen pH-Werten zerstört wird, d.h. die innere, erste Kapselung muß wasserlöslich und alkalibeständig sein, da sie direkten Kontakt mit dem hochalkalischen Zement hat.

Bei einem Bindemittel in Form von Zement kann schließlich die äußere, zweite Kapselung im wesentlichen aus Polycarbonat und/oder Melamin Formaldehyd-Harz bestehen.

Bei einem Bindemittel in Form von Zement kann schließlich vorteilhafterweise die innere, erste Kapselung im wesentlichen aus Polyvinylalkohol bestehen, wodurch eine Unempfindlichkeit gegen hohe pH-Werte der inneren Kapsel erreicht wird und eine Wasserlöslichkeit.

Die Erfindung wird nun unter Bezugnahme auf die nachfolgenden schematischen Zeichnungen anhand eines Ausführungsbeispieles im einzelnen beschrieben. Darin zeigen:

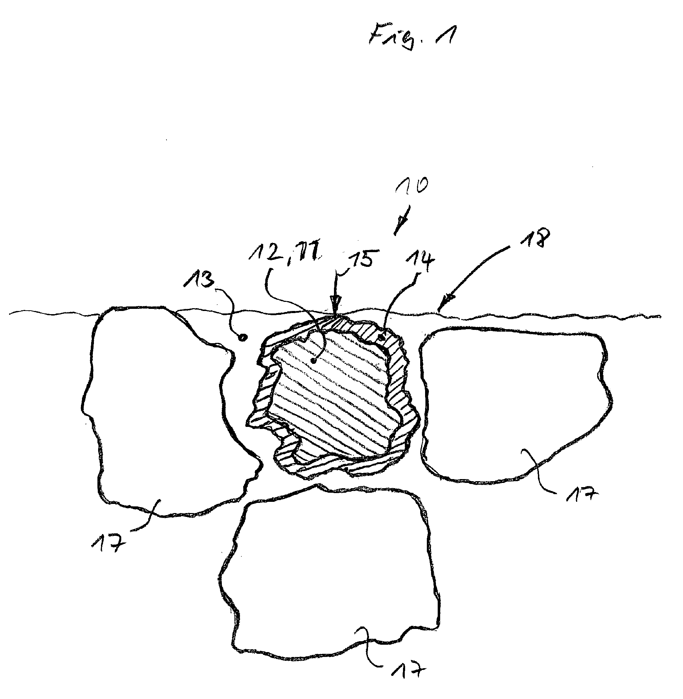

- Fig. 1: in einem schematischen Schnitt einen makroskopisch vergrößert dargestellten Ausschnitt aus einer Betonprobe, bei dem ein partikelförmiger Körper, der mit einer Kapselung umgeben ist, von einer Mehrzahl von Körpern von Zuschlagstoffen für den Beton umgeben ist, und

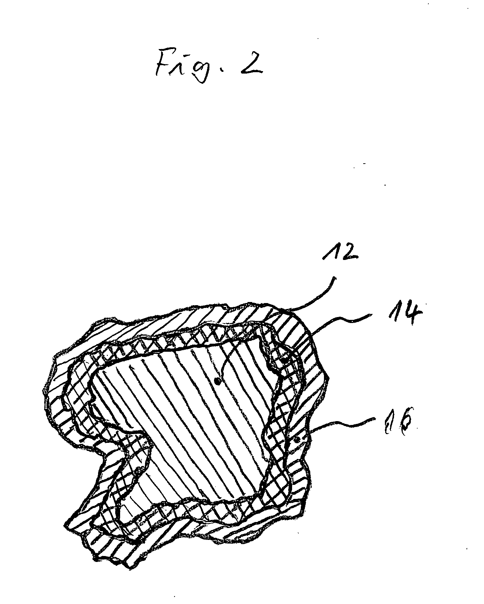

- Fig. 2: in einem schematischen Schnitt, ähnlich dem von Fig. 1, bei dem ein bindemittelbildender, partikelförmiger Körper von einer ersten Einkapselung und einer zweiten Einkapselung umgeben ist, hier allerdings zur Erhöhung der Deutlichkeit unter Auslassung der Zuschlagstoffe, ebenfalls in makroskopisch vergrößerter Darstellung.

Bevor auf das Bindemittel 11 anhand der beiden schematischen Fig. 1 und 2 im einzelnen eingegangen wird, sei vorab darauf hingewiesen, daß die Erfindung sich nicht auf die Auslösung eines Erhärtungsvorganges bei einem Bindemittel in Form von Zement beschränkt.

Vielmehr können mit der erfindungsgemäß vorgeschlagenen Lösung auch andere Bindemittel versehen werden, d.h. mit einer Kapselung versehen werden. Die Erfindung bezieht sich keineswegs nur auf hydraulische Bindemittel, d.h. solche, die nur in einem wäßrigen Milieu zu einer Feststoffphase erhärten.

Es wird zunächst Bezug genommen auf Fig. 1, in der ein partikelförmiger Körper 12 dargestellt ist. Eine beliebig große Menge derartiger partikelförmiger Körper 12 bildet das eigentliche Bindemittel 11, wobei in Fig. 1 aus Übersichtlichkeits- und Einfachheitsgründen lediglich ein partikelförmiger Körper 12 dargestellt ist. Der partikelförmige Körper 12 ist eingekapselt, d.h. von einer Kapsel 14 hermetisch umgeben. Nicht zwingend aber in der Regel vorhanden, sind die partikelförmigen Körper 12 mit Zuschlagstoffen 17 umgeben bzw. in diese eingebettet, wobei diese Zuschlagstoffe bspw. Kies, Schotter, Split oder andere Materialien sein können.

Die Menge der partikelförmigen Körper 12, die Menge der Zuschlagstoffe 17 und ggf. weiterer, hier im einzelnen nicht bezeichneter und nicht dargestellter Zusatzstoffe werden in ein flüssiges Medium 13 eingemischt bzw. mit diesem vermischt.

Besteht bspw. die Menge der partikelförmigen Körper 12 aus Zement und ist das flüssige Medium 13 Wasser und sind die Zuschlagstoffe 17 bspw. Kies, Schotter oder Split, um bei diesen Beispielen zu bleiben, so wird das Gemisch bekanntermaßen Betongemisch genannt und dann, wenn es die Feststoffphase erreicht hat, Beton. Weist die Menge der partikelförmigen Körper 12 keine Kapselung 14 (erste Kapselung) aus einem ersten Mittel auf, liegen die partikelförmigen Körper 12 an ihrer Oberfläche frei und sofort mit dem Kontakt mit dem flüssigen Medium 13 in Form von Wasser beginnt der Erhärtungsvorgang, wobei am Ende des Erhärtungsvorganges dann zwischen den partikelförmigen Körpern wirkende Oberflächen- und Adsorbtionskräfte in ihrer Gesamtheit die Festigkeit des erhärteten Zements ergeben.

Durch das Vorsehen der Kapselung 14, die jeden partikelförmigen Körper 12 umgibt, kann das flüssige Medium 13 in Form von Wasser den die partikelförmigen Körper 12 bildenden Zement nicht erreichen.

Das Gesamtgemisch aus Bindemittel 11 und Zuschlagstoffen 17 sowie ggf. besagter weiterer Zusätze kann nun, obwohl miteinander vermischt, beliebig modelliert werden und der Anwender kann, bspw. nach Abschluß der Modellierung mittels des so gebildeten Baustoffs bzw. Betons 10 durch Beaufschlagung von außen, in Fig. 1 schematisch durch den Pfeil 15 symbolisiert, bspw. durch einen chemischen und/oder physikalischen Impuls, Impuls im Sinne von Einwirkung bzw. Anregung, die Einkapselung gezielt durch den Einfluß von außen beaufschlagt, die Kapselung 14 zerstören. Nunmehr liegt die Menge aller partikelförmiger Körper 12, hier in Form der Menge aller Zementteilchen an ihren Oberflächen frei und der chemische Abbindeprozeß des Zements kann unter Einbindung der Zusatzstoffe 17 seine sich im Zuge des Aushärteprozesses ausbildenden Oberflächen- und Adsorbtionskräfte entfalten, die in ihrer Gesamtheit die Festigkeit des erhärteten Zements bzw. hier des Betons 10 ergeben.

Für die Ausgestaltung des partikelförmigen Körpers 12 gem. Fig. 2 gilt grundsätzlich genau das, was vorangehend zu Fig. 1 dargelegt worden ist. Wie erwähnt, unterscheidet sich der partikelförmige Körper 12 gem. Fig. 1 vom partikelförmigen Körper 12 gem. Fig. 2 dadurch, daß der partikelförmige Körper 12 direkt in Kontakt mit der ihn umgebenden ersten Kapselung eines ersten Mittels steht, wobei der mit dieser ersten Kapselung 14 umgebene Körper 12 mit einer zweiten Kapselung 16 eines zweiten Kapselmittels umgeben ist.

Anhand der Fig. 2 wird beispielhaft die Auslösung des Erhärtungsvorganges eines Betongemisches 10 bzw. allgemein eines zementgebundenen Bauteils beschrieben. Durch z.B. Erhöhung des pH-Wertes auf der Oberfläche 18 des Bauteils, s. auch Fig. 1, wird durch einen chemischen oder physikalischen Impuls, Beaufschlagung 15, die Erhärtung des Betongemisches eingeleitet. Die zweite äußere Kapselung 16 ist beständig in Wasser, also nicht löslich in Wasser im neutralen pH-Wertbereich, sie muß aber bei hohen pH-Werten zerstört werden können. Die innere Kapselung 14 muß wasserlöslich und beständig in Kontakt mit dem eingekapselten Bindemittel sein, da sie direkten Kontakt mit dem z.B. hochalkalischen Zement 11, 12 hat. Ein so verkapselter Zement 11, 12 hydratisiert beim Vermischen mit dem flüssigen Medium in Form von Wasser 13 nicht. Eine Erhärtung des Gemisches findet nicht statt. Da der Zement 11, 12 verkapselt ist, bleibt eine Suspension pH-neutral. Die äußere Kapselung 16 ist in pH-neutralem Wasser 13 stabil. Da die äußere Kapselung 16 vom Zement 11, 12 durch die innere Kapselung 14 getrennt ist, wird sie durch dessen hohe Aktivität nicht angegriffen. Die innere Kapselung 14 ist zwar wasserlöslich, hat aber durch die äußere Kapselung 16 keinen direkten Kontakt mit Wasser 13. Gegen den alkalischen Zement 11, 12 ist sie stabil.

Erhöht man jetzt lokal den pH-Wert der Suspension, z.B. durch dünnes Aufstreuen, s. Pfeil 15 von Fig. 1, von unverkapseltem Zement auf eine Oberfläche 18 eines Bauteils, werden an dieser Stelle die äußeren, zweiten Kapselungen 16 zerstört, dadurch kommen die inneren Kapselungen 14 in Kontakt mit Wasser 13 und werden ebenfalls zerstört. Der verkapselte Zement 11, 12 kommt in Kontakt mit Wasser 13 und der Aushärtevorgang beginnt.

Dadurch, daß bei diesem Vorgang hochalkalischer Zement 11, 12 freigesetzt wird, erhöht sich der pH-Wert an dieser Stelle weiter und der Härtungsprozeß pflanzt sich durch das ganze Bauteil bzw. durch die Betonsuspension 10 hindurch fort, und zwar nach Art einer Kettenreaktion, bis die Menge aller partikelförmiger Körper 12 aus Zement entsprechend beaufschlagt und freigelegt worden sind und an der Abbindereaktion des Zements 11, 12 teilnehmen.

### Bezugszeichenliste

- 10: Beton
- 11: Bindemittel (Zement)
- 12: partikelförmiger Körper (Zementteilchen bzw. -körper)
- 13: flüssiges Medium (Wasser)
- 14: Kapsel (erste) aus einem ersten Mittel
- 15: Beaufschlagung, Beaufschlagungsimpuls
- 16: Kapsel (zweite)
- 17: Zuschlagsstoff
- 18: Oberfläche

## Patentansprüche

1. Bindemittel (11), bestehend aus einer Menge, im wesentlichen partikelförmiger Körper (12), die bei Kontakt mit einem flüssigen Medium (13) eine Feststoffphase bilden, **dadurch gekennzeichnet, daß** jeder Körper (12) mit wenigstens einem ersten Mittel eingekapselt ist und die Ausbildung der Feststoffphase erst dann erfolgen kann, wenn die Menge der eingekapselten Körper (12, 14) derart beaufschlagt wird, daß die Einkapselung (14) zerstört wird.

2. Bindemittel nach Anspruch 1, **dadurch gekennzeichnet, daß** die Beaufschlagung (15) durch chemische Beeinflussung erfolgt.

3. Bindemittel nach Anspruch 1, **dadurch gekennzeichnet, daß** die Beaufschlagung (15) durch physikalische Beeinflussung erfolgt.

4. Bindemittel nach einem oder mehreren der Ansprüche 1 bis 3, **dadurch gekennzeichnet, daß** das Bindemittel (11) Zement und das flüssige Medium (13) im wesentlichen Wasser ist.

5. Bindemittel nach Anspruch 4, **dadurch gekennzeichnet, daß** die partikelförmigen, eingekapselten Körper (12, 14) mit einer die erste Kapselung umgebenen zweiten Kapselung (16) umkapselt sind.

6. Bindemittel nach Anspruch 5, **dadurch gekennzeichnet, daß** die zweite äußere Kapselung (16) nicht wasserlöslich ist, aber von Wasser (13) mit hohem pH-Wert zerstört wird.

7. Bindemittel nach einem oder beiden der Ansprüche 5 oder 6, **dadurch gekennzeichnet, daß** die erste innere Kapselung (14) durch Kontakt mit Bindemittel (11) nicht zerstört wird, aber wasserlöslich ist.

8. Bindemittel nach einem oder mehreren der Ansprüche 5 bis 7, **dadurch gekennzeichnet, daß** die äußere, zweite Kapselung (16) im wesentlichen aus Polycarbonat und/oder Melamin Formaldehyd-Harz besteht.

9. Bindemittel nach einem oder mehreren der Ansprüche 5 bis 8, **dadurch gekennzeichnet, daß** die innere, erste Kapselung (14) im wesentlichen aus Polyvinylalkohol besteht.
